# EUROPEAN PATENT APPLICATION

(11) **EP 4 814 822 A1**
(43) Date of publication of application: **30.09.2026**
(21) Application number: 26165442.0
(22) Date of filing: 17.03.2026
(51) Int. Cl.: G06Q 10/06

(54) **GEN AI BASED ASSET HIERARCHY EXTRACTION AND AUTO TEMPLATE GENERATION**

(30) Priority: 28.03.2025 IN 202511029951
(71) Applicant: Schneider Electric Systems USA, Inc., Foxborough, MA 02035 (US)
(72) Inventor: BODANAPU, Padmaj, 500019 TELANGANA (IN); SINHA, Bhaskar, 500019 TELANGANA (IN); KONDEJKAR, Sameer, 411038 MAHARASHTRA (IN)
(74) Representative: Plasseraud IP

(57) **Abstract**

An asset hierarchy identification system using a machine learning (ML) model and generative artificial intelligence (Gen AI). A process and instrumentation diagram (P&ID) and legend sheets of the industrial automation system are provided to an engineering analyzer processor. The analyzer processor identifies assets and sub assets within the P&ID based on drawn bounding boxes and matching the drawn boxes to other assets within the P&ID using the ML model. The analyzer processor then generates prompts using the Gen AI to identify a hierarchy of instruments associated with each sub asset. The analyzer processor then generates Composite Automation Type (CAT) instances and associates the CAT instances according the identified asset hierarchy.

## Description

### BACKGROUND

Object based asset hierarchies are essential for latest control and configuration of industrial automation systems. Conventionally, to create an asset hierarchy, a control or process engineer must manually identify assets within documentation such as process and instrumentation diagrams (P&ID), legend sheets, control narrative, and other configuration documents. Then the engineer must manually extract tags, process lines, and control lines. If the automation control system implements a standard, such as IEC-61499, then the constructed hierarchy must be rendered into a format compliant with the standard. For example, the information must then be used to manually create Composite Automation Type (CAT) instances reflecting the assets and components. As a result, this process can take multiple hours to configure per system. Further, as systems expand and grow more complex, this process increasingly requires more time for process and control engineers to configure.

Various arrangements have been developed relating to automatic extraction of assets and for using an artificial intelligence engine for engineering automation. One exemplary arrangement is described in U.S. Patent No. 12,099,779, entitled, "Automatic Extraction of Assets Data from Engineering Data Sources," assigned to Schneider Electric System U.S.A., Inc. (hereinafter " '779 patent"). Another exemplary arrangement is described in U.S. Patent Publication No. 20230213921, entitled, "Knowledge Driven Artificial Intelligence Engine for Engineering Automation," assigned to Schneider Electric Systems U.S.A., Inc. (hereinafter " '921 publication"). An additional exemplary arrangement is described in U.S. Patent Publication No. 20220197272, entitled, "Automatic Extraction of Assets Data from Engineering Data Sources for Generating an HMI." The contents of the '779 patent, the '921 publication, and the '272 publication are hereby incorporated by reference.

### SUMMARY

Aspects of the present disclosure disclose a system for extracting an asset hierarchy in an industrial automation system from process and instrumentation diagrams (P&ID) and legend sheets. An engineering analyzer processor receives P&ID and legend sheets to determine primary assets of the industrial automation system. The assets are identified by a bounding box input on the P&ID from an operator, control engineer, or through machine learning identifying similar assets. An Al asset identification engine executed by the engineering analyzer processor identifies sub assets within the P&ID using a machine learning model trained on historical P&ID. Then an asset hierarchy extraction engine executed by the engineering analyzer processor identifies instruments using a generative artificial intelligence (Gen AI) using prompts presented to the operator and the legend sheets. The identified assets, sub assets, and instruments are rendered into a hierarchy based on the identified relationships. A Composite Automation Type instance is generated for each of the assets, sub assets, and instruments. The CAT instances are associated with their associated sub assets and instruments.

In an aspect, a system for extracting asset hierarchy includes an industrial automation system, an engineering analyzer processor coupled to the industrial automation system, and an engineering analyzer database coupled to the engineering analyzer processor. The engineering analyzer database stores historical process and instrumentation diagram (P&ID) information and historical legend sheet information. The system also includes a memory coupled to the engineering analyzer processor. The memory stores computer-executable instructions that, when executed by the engineering analyzer processor, configure the engineering analyzer processor for receiving a plurality of legend sheets and a process and instrumentation diagram (P&ID). The executed instructions also include executing an artificial intelligence (AI) asset identification engine to identify each of the one or more assets. Executing the Al asset identification engine includes determining one or more sub assets associated with the identified assets and the related assets based on the P&ID and the historical P&ID information. The executed instructions also include executing a generative artificial intelligence (Gen AI) asset hierarchy extraction engine to identify each of the one or more sub assets. Executing the Gen AI asset hierarchy extraction engine includes generating one or more prompts associated with at least one of the sub assets, receiving, in response to the prompts, one or more sub asset identities associated with each of the sub assets, and determining one or more instruments associated with the sub assets based on the sub asset identities associated with the sub assets and the legend sheets. The executed instructions also include generating an asset hierarchy based on the instruments associated with the sub assets and the sub assets associated with the identified assets and the related assets, storing the asset hierarchy in the engineering analyzer database, and transmitting, to a display coupled to the engineering analyzer processor, a graphical representation of the asset hierarchy.

In another aspect, a method for extracting asset hierarchy in an industrial automation system includes receiving a plurality of legend sheets and a process and instrumentation diagram (P&ID) and determining one or more assets based on the P&ID. The method also includes executing, by an engineering analyzer processor, an artificial intelligence (AI) asset identification engine to identify each of the assets. Executing the Al asset identification engine includes determining, using a machine learning model, one or more sub assets associated with each of the assets based on the P&ID. The method further includes executing, by the engineering analyzer processor, a generative artificial intelligence (Gen AI) asset hierarchy extraction engine to identify each of the sub assets. Executing the Gen Al asset hierarchy extraction engine includes generating a prompt for each of the sub assets, receiving, in response to the prompt, a sub asset identity associated with each of the sub assets, and determining one or more instruments associated with each of the sub assets based on the sub asset identity associated with each of the sub assets and the legend sheets. The method also includes generating an asset hierarchy based on the assets, the sub assets associated with each of the assets, and the instruments associated with each of the sub asset. The method yet further includes obtaining a basic CAT instance for each of the instruments, generating a sub asset CAT instance for each of the sub assets and associating the sub asset CAT instance with the basic CAT instance for each of the instruments associated with each of the sub assets, and generating an asset CAT instance for each of the assets and associating the asset CAT instance with the sub asset CAT instance for each of the sub assets associated with each of the assets.

In yet another aspect, a method of training a machine learning model to identify assets of an industrial automation system includes generating a training set of asset information based on one or more historical process and instrumentation diagrams, the historical process and instrumentation diagrams comprising one or more assets, one or more sub assets associated with each of the assets, and process control information. The method also includes generating a test set of asset information based the historical process and instrumentation diagrams, providing to the training set of asset information to the machine learning model, and updating the machine learning model based on the training set of asset information. The method further includes providing, to the machine learning model, the test set of asset information to the machine learning model, receiving a predicted asset based on the input test set of asset information, and updating, in response to feedback information, the machine learning model.

In one aspect, a method of training a generative artificial intelligence model to generate instruments of sub assets within an industrial automation system includes generating a training set of sub asset information based on one or more historical process and instrumentation diagrams and historical legend sheets, the historical process and instrumentation diagrams comprising one or more assets, one or more sub assets associated with each of the assets, and process control information and the historical legend sheets comprising instrument identification information. The method also includes generating a test set of sub asset information based the historical process and instrumentation diagrams and historical legend sheets, providing to the training set of asset information to the generative artificial intelligence model, and updating the generative artificial intelligence model based on the training set of asset information. The method further includes providing, to the generative artificial intelligence model, the test set of asset information to the machine learning model, receiving a predicted asset based on the input test set of asset information, and updating, in response to feedback information, the generative artificial intelligence model.

Other objects and features of the present invention will be in part apparent and in part pointed out herein.

### BRIEF DESCRIPTION OF THE DRAWINGS

FIG. 1 illustrates a block diagram of a system for extracting the asset hierarchy in an industrial automation system according to an embodiment.
FIG. 2 is a flow diagram illustrating the process of generating an asset hierarchy and Composite Automation Type (CAT) instances according to an embodiment.
FIG. 3 is a block diagram illustrating an example dissolved air flotation system with its sub assets and instruments.
FIG. 4 is a flow diagram illustrating a method of training an artificial intelligence according to an embodiment.
FIG. 5 is a flow diagram illustrating a method of training a generative artificial intelligence according to an embodiment.
FIG. 6 is an illustration of a process and instrumentation diagram (P&ID) according to an embodiment.
FIG. 7 is an illustration of a legend sheet according to an embodiment.
FIG. 8 is a block diagram illustrating a computer system according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

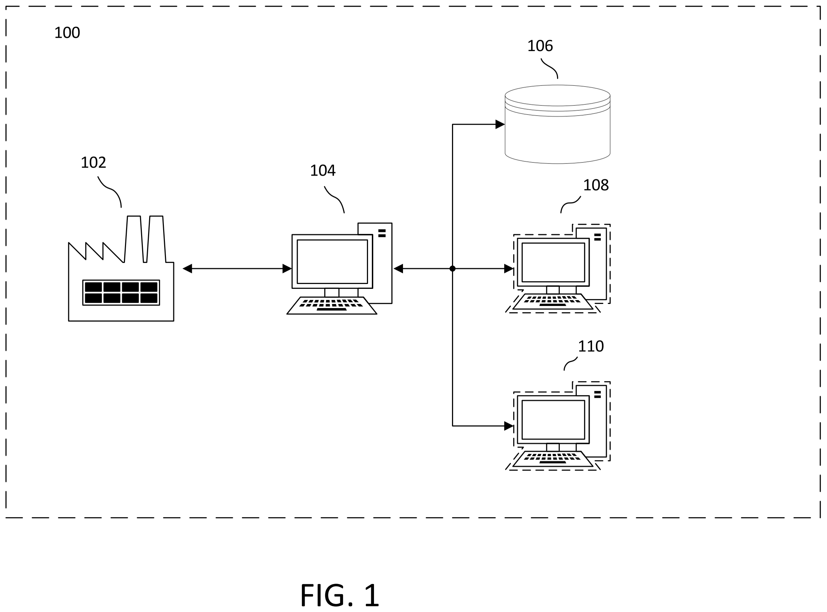

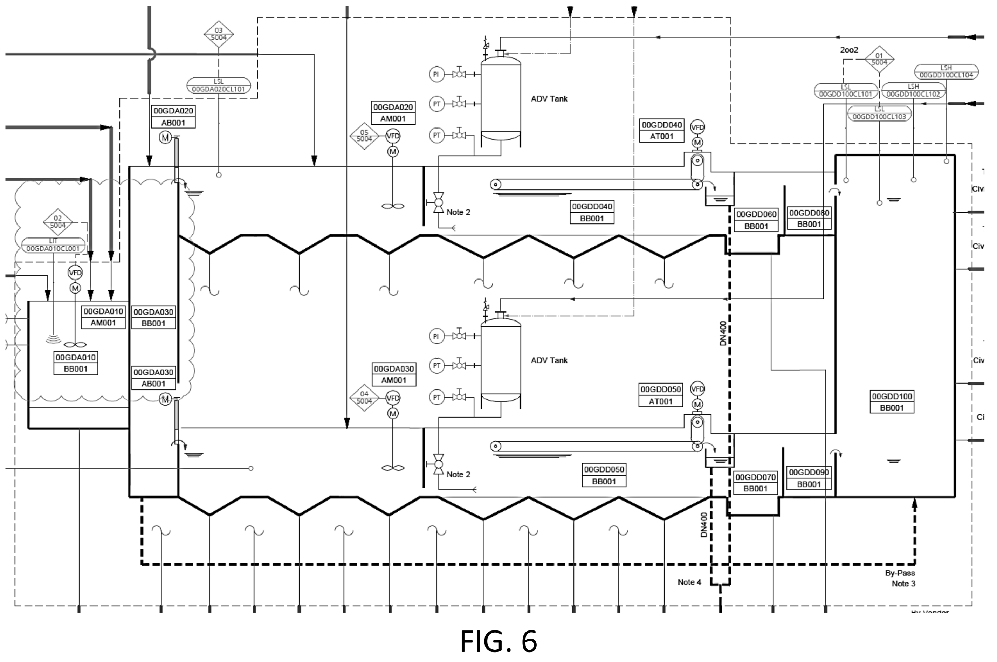

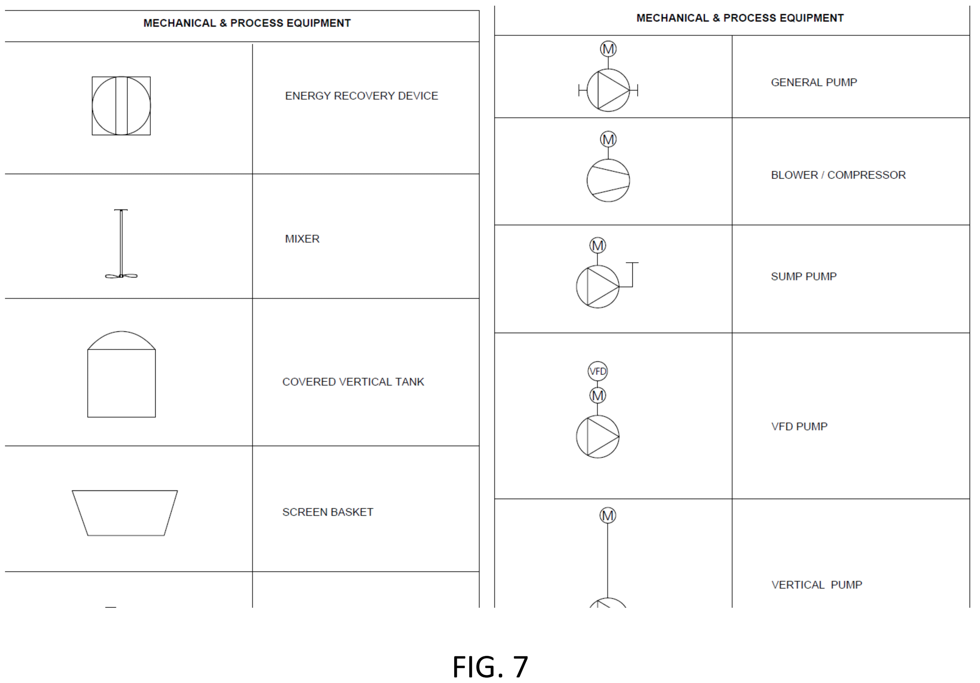

Referring to the figures and description below, a system for extracting asset hierarchy in an industrial automation system is disclosed. FIG. 1 is a block diagram illustrating the asset extraction system 100. The asset extraction system 100 identifies and extracts assets of an industrial automation system 102 using a process and instrumentation diagram (P&ID)-alternatively, a piping and instrumentation diagram (P&ID)-and legend sheets. FIG. 6 illustrates an example P&ID according to an embodiment, and FIG. 7 illustrates an example legend sheet according to an embodiment. The industrial automation system 102 may be part of a wastewater treatment system, green energy generation, or any other industrial process. While specific examples of industrial automation systems 102 may be used, the asset hierarchy extraction process may be implemented on any industrial automation system 102 in which P&ID and legend sheet information is provided.

In some embodiments, the industrial automation system 102 is managed by an engineering analyzer processor 104. The engineering analyzer processor 104 facilitates and controls various aspects of industrial automation system 102. In one embodiment, the engineering analyzer processor 104 is coupled to the industrial automation system 102 through a wireless or wired network. In one or more embodiments, the engineering analyzer processor 104 operates on infrastructure within the same facility as the industrial automation system 102. In other embodiments, the engineering analyzer processor 104 operates on infrastructure outside the facility, such as the cloud. In another embodiment, the engineering analyzer processor 104 operates software for controlling the industrial automation system 102. For example, Schneider Electric's EcoStruxure Automation Expert (EAE) may be executed by the engineering analyzer processor 104 to aid in automating various engineering tasks and implement aspects of the system. The needs for automated hierarchies are even great with platforms that utilize a standard such as IEC 61499. Unlike traditional control systems, standard based control systems require a uniformity in how the assets are identified and placed in a hierarchy.

The engineering analyzer processor 104 further couples with input such as a mouse and/or keyboard to receive inputs from operators. Further, the engineering analyzer processor 104 may include one or more monitors for displaying information to operators. The asset extraction system 100 also includes an engineering analyzer database 106 coupled to the engineering analyzer processor 104. In some embodiments, the engineering analyzer database 106 operates on the same hardware infrastructure as the engineering analyzer processor 104 within the facility of the industrial automation system 102. The engineering analyzer database 106 stores information about the industrial automation system 102 and its components. In some embodiments, the engineering analyzer database 106 stores historical information about the industrial automation system 102.

In one or more embodiments, the engineering analyzer processor 104 executes an artificial intelligence (AI) asset identification engine 108. In some embodiments, the AI asset identification engine 108 is a machine learning system trained on historical P&ID and legend sheet information, further described below. The Al asset identification engine 108 receives P&ID information to determine and identify sub assets of a main asset within the industrial automation system. In some embodiments, the Al asset identification engine 108 receives an input from the operator identifying a main asset. The AI asset identification engine 108 then utilizes the input to identify other similar assets within the P&ID.

In several embodiments, the engineering analyzer processor 104 executes an asset hierarchy extraction engine 110. In one embodiment, the asset hierarchy extraction engine 110 is implemented using a generative artificial intelligence (Gen Al). In one or more embodiments, the Gen AI may use GPT-4o Vision or Gemini Vision as a base model. The asset hierarchy extraction engine 110 generates prompts to identify instruments' relationships with each sub asset within the industrial automation system 102. Thus, in several embodiments, after the Al asset identification engine 108 determines the assets and sub assets of the industrial automation system 102, the asset hierarchy extraction engine 110 automatically creates and provides prompts to an entity, such as an operator or a Gen AI, to identify instruments associated with each sub asset to develop the asset hierarchy. In certain embodiments, the entity receiving prompts from the asset hierarchy extraction engine 110 is a computer-implemented entity (such as the AI asset identification engine 108 or another Gen Al model) that is configured to automatically extract corresponding instruments and/or equipment for sub assets, to help develop the asset hierarchy. In certain embodiments, the extraction of corresponding instruments and/or equipment is based on one or more of the P&ID, one or more legend sheets, and/or via self-learning/training. To generate the prompts, the asset hierarchy extraction engine 110 determines the required use case objectives and suggests instruments and/or sub assets based on required structure to achieve the objective. The asset hierarchy extraction engine 110 trains on historical P&ID information, historical legend sheet information, and previously defined asset hierarchies in order to properly identify instruments belonging to a sub asset.

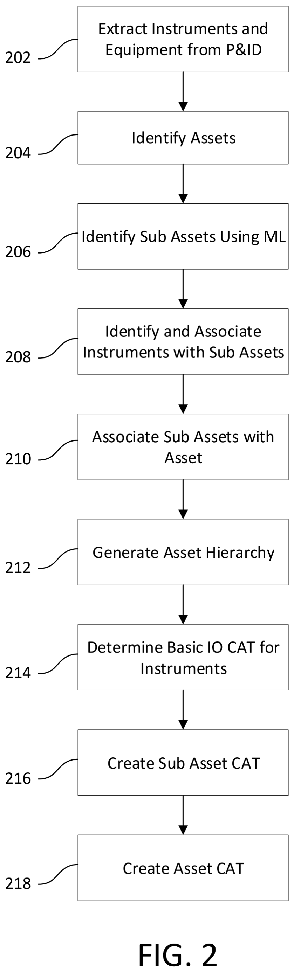

FIG. 2 is a flow diagram illustrating the process of extracting an asset hierarchy of an industrial automation system. First, at step 202, asset information and equipment information are extracted from the P&ID. In some embodiments, the engineering analyzer processor 104 receives an input file of a P&ID from a process or control engineer. In other embodiments, the engineering analyzer processor 104 receives an input including P&ID and legend sheets simultaneously.

After receiving the input P&ID, assets of the P&ID are identified at step 204. In one embodiment, the assets are identified through a received input from a process or control engineer using an input device connected to the engineering analyzer processor, for example a mouse and keyboard. In some embodiments, the input is a bounding box of the asset within the P&ID. For example, the engineering analyzer processor 104 may present the P&ID to an operator through a display coupled to the engineering analyzer processor 104. Then the operator may click and drag to create a bounding box identifying an asset of the industrial automation system 102. In another embodiment, the P&ID also includes markings such as lines around each of the assets, which the engineering analyzer processor 104 uses to identify the assets. In yet another embodiment, Al asset identification engine 108 includes a machine learning model trained on historical P&ID's to determine automatically a bounding box for the assets of the P&ID. For example, following an input from the operator as previously described, the engineering analyzer processor 104 may identify similar assets within the P&ID and automatically draw bounding boxes around the asset and its components. Additionally, the trained Al asset identification engine 108 identifies assets within the P&ID based on previous training information.

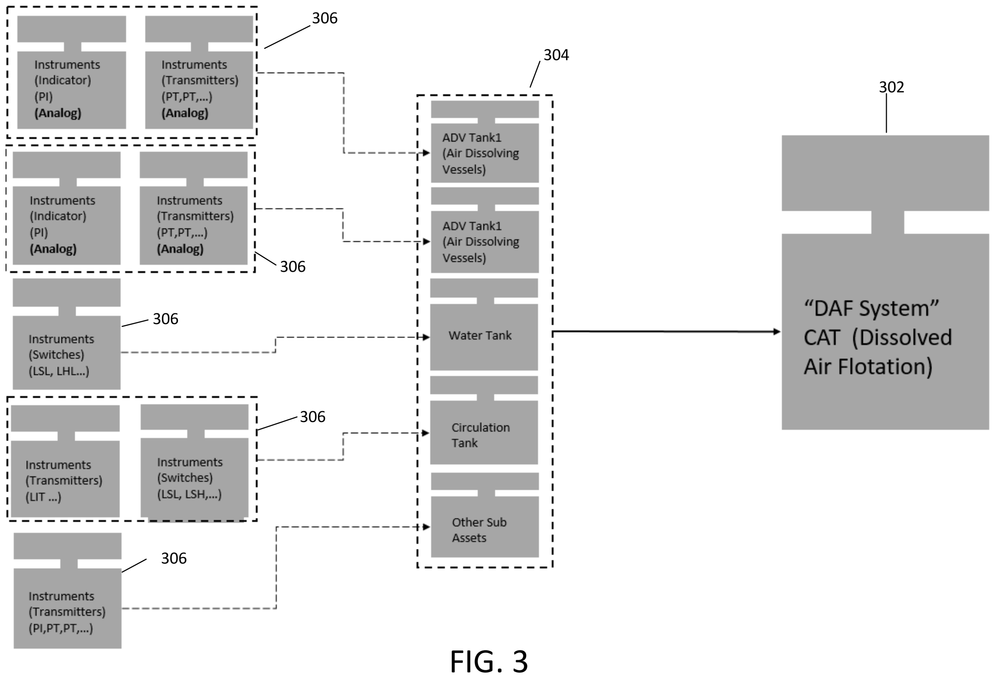

Next, at step 206, the AI asset identification engine 108 identifies sub assets for each asset within the P&ID. In some embodiments, the AI asset identification engine 108 comprises a machine learning model executed by the engineering analyzer processor 104. The machine learning model of the Al asset identification engine 108 trains on historical P&ID information through a training process, described further below. Upon receiving an input of assets within the P&ID the Al asset identification engine 108 generates an identification of the sub assets. Identifying sub assets involves determining components for each of the assets. For example, a dissolved air flotation (DAF) system may be an identified asset within the industrial automation system. A DAF system has several sub assets such as air dissolving vessels, a water tank, a circulation tank, and other components. See, FIG. 3. In this example, the AI asset identification engine 108 uses the P&ID to determine that the DAF system, as a main asset 302, has the previously mentioned sub assets 304 associated with it.

Then, an asset hierarchy extraction engine 110 identifies and associates instruments for each of the sub assets at step 208. The asset hierarchy extraction engine 110, based on a generative artificial intelligence, generates prompts to assist in identifying instruments of each sub asset within the industrial automation system 102 represented by the P&ID and legend sheets. The asset hierarchy extraction engine 110 predicts potential instruments of a sub asset based on the sub asset type and required use case objectives for the sub asset. Thus, in certain embodiments, the asset hierarchy extraction engine 110 then presents one or more prompts for an operator or a receiving Gen Al entity to identify the sub asset type. The asset hierarchy extraction engine 110 then uses the sub asset type to predict instruments and/or equipment associated with the sub asset based on legend sheet information.

Similar to the association between assets and sub assets, each sub asset may have several instruments associated with it. As a result, in certain embodiments, through providing prompts, the asset hierarchy extraction engine 110 enables an operator to quickly identify instruments belonging to each sub asset. In other embodiments, if the prompts are provided to a Gen Al implemented entity, the Gen Al implemented entity automatically responds to the prompts by identifying the instruments and/or equipment belonging to each sub asset. By using a secondary Gen Al to identify instruments in response to the prompts generated by the asset hierarchy extraction engine 110, the entire asset hierarchy may be constructed without additional input by an operator. Using the previous example of a DAF system, an air dissolving tank may have an indicator and transmitter as instruments 306 or a circulation tank may include switches and transmitters. See, FIG. 3. According to the present embodiment, the asset hierarchy extraction engine 110 may prompt selection of instruments 306 based on previous air dissolving tank information or based on the present P&ID and legend sheet. As a result, the asset hierarchy extraction engine 110 could suggest that an indicator, transmitters and/or other instruments are identified with the air dissolving tank.

After identifying and associating the instruments, the sub assets are associated with their primary asset creating a first sub layer of the hierarchy at step 210. After the assets have been associated with their sub assets, a complete asset hierarchy is generated by associating the sub assets with their respective instruments at step 212. By using the relationships identified by the Al asset identification engine 108 and the asset hierarchy extraction engine 110, the hierarchy identifies the relationship between the assets and their respective sub assets and also the sub assets with their respective instruments. In some embodiments, the asset hierarchy is generated and exported through a formatted file or object such as JSON or XML. In other embodiments, the asset hierarchy is stored in the engineering analyzer database 106. Both storing and generating export files enables the automatically generated hierarchies to be used by other tools of the industrial automation system 102, the engineering analyzer processor 104, and the engineering management software operating on the engineering analyzing processor 104.

After generation of the hierarchy, Composite Automation Type (CAT) instances are generated automatically for all components of the system starting with the instruments at step 214. CAT instances are software instances that encapsulate logical control and functions with other components such as the human-machine interface (HMI). The CAT instances operate in conformity with the IEC-61499 standard. In one or more embodiments, each instrument has a corresponding basic I/O CAT instance structure stored within the engineering analyzer database 106. Next, a CAT instance is generated for each sub asset at step 216. For each sub asset, its respective CAT instance is associated with the basic I/O CAT instance of the instruments associated with the sub asset at step 210.

Then, a CAT instance for each main asset is generated at step 218. Each main asset CAT instance is also associated with its respective sub asset CAT instances according to the relationship identified in step 210. Referring to the example as shown by FIG. 3, first basic I/O CAT instances are retrieved for each of the instruments such as indicators, transmitters, and switches. Then a CAT instance is generated for each of the sub assets, such as the air dissolving vessels, the water tank, and the circulation tank. In generating the CAT instance for the air dissolving vessels, its CAT instance is associated with the CAT instance for the indicator and transmitters as sub CAT instances. Similarly, the main asset CAT instance for the DAF is generated and associated with the CAT instance for each of the air dissolving vessels, water tank, and circulation tank as sub CAT instances. Those of skill in the art will appreciate that the arrangement of FIG. 3 illustrative of the types of asset hierarchies that can be produced for many different sets of assets, sub assets, instruments, and equipment.

In some embodiments, in addition or alternatively to generating the CAT instances, the engineering analyzer processor 104 may use the asset hierarchy to assist in generation of HMI screen navigation. For example, the engineering analyzer processor 104 may present, on a display coupled to the processor 104, the asset hierarchy to an HMI engineer. Thus, the HMI engineer can configure and enable screen navigation of the industrial automation system 102. Additionally, the engineering analyzer processor 104 may utilize the asset hierarchy to build control applications for operating the system, thus the asset hierarchy may act as an HMI asset hierarchy. Additional details regarding usage of the HMI asset hierarchy may be found in U.S. Publication No. 20220197272 mentioned above and incorporated herein by reference. Similarly, the hierarchy information can be used to aid in phases of engineering and simulation. Further, the hierarchy information may be leveraged for trouble shooting issues within the industrial automation system 102 by aiding in identifying the components of the system causing errors and their relationship to other components. In addition, the hierarchy information is usable in connection with automatically generating a set of one or more automatic controls for the industrial automation system 102.

By automatically identifying assets, sub assets, and instruments within an industrial automation system 102, configuration of equipment occurs much more quickly. Rather than waiting for an operator to analyze and input data from the P&ID and the legend sheets over the course of hours, the engineering analyzer processor 104 enables quick uptime for industrial automation systems 102, enabling, in certain embodiments, more rapid progression from configuration to operation, for industrial automation systems 102. Further, information collected within the asset hierarchy enables other maintenance and management functions of the industrial automation system 102.

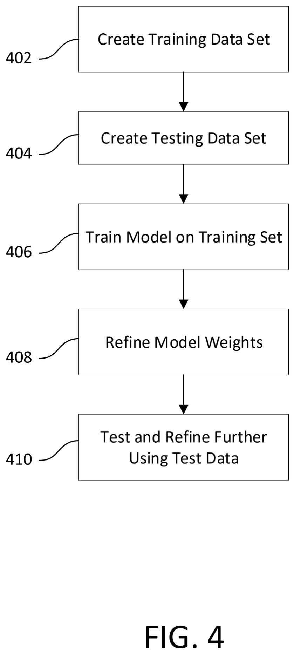

FIG. 3 is a block diagram illustrating an exemplary hierarchy for a DAF system. The DAF system 302 may be identified as an individual asset within a P&ID diagram, see FIG. 4. The DAF system 302 includes several sub assets 304, shown as air dissolving vessels, water tank, circulation tank, and other assets. For each sub asset 304, there are multiple instruments 306 which monitor, configure, and alert the status of the sub assets. As illustrated each air dissolving vessel includes an indicator and transmitters. The water tank includes switches and the circulation tank includes switches and transmitters. The determined asset hierarchy, as shown, allows the creation of CAT instances for each of that components that reflect the asset-sub asset and sub asset-instrument relationships.

FIG. 4 illustrates a process of training the Al asset identification engine 108 according to an embodiment. First, at step 402, historical P&ID and legend sheet information are curated to create a training set of data. The training set of data includes information about industrial automation systems, their hierarchies after being extracted, and a given input of P&ID and legend sheet data. The P&ID input may include a set of assets along with pre-drawn bounding boxes used to identify the assets within the P&ID. Next or simultaneous to the creation of the training set, a testing set of historical P&ID and legend sheet information is curated at step 404. Then, the training set of data is fed into the Al asset identification engine 108 to update the model at 406. Next, the model is refined by updating the weights of parameters of the model at step 408. Finally, the model is tested and further refined by feeding the model the test set of data at step 410.

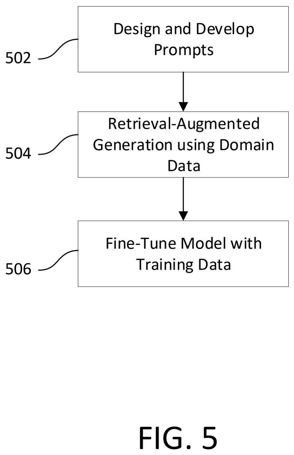

FIG. 5 illustrates a process of training the Gen AI asset hierarchy extraction engine 110 according to an embodiment. First at step 402, prompts for the generative Al are designed and developed. Then during retrieval-augmented generation (RAG), the asset hierarchy extraction engine 110 is provided with additional domain data along with the generated prompts. By using RAG, the LLM model trains with specific expertise without requiring a full retraining and modification of the base LLM. The additional domain data may include asset hierarchy context information that includes information about asset hierarchy requirements not present within the training data itself. For example, the asset hierarchy context information may include information related to a standard such as IEC 61499. Thus, the generative Al trains and refines using a subset of training information related to the industrial automation process. At step 404, the asset hierarchy extraction engine is trained by fine-tuning the model based on a training set of data based on historical P&ID and legend sheet information.

It is contemplated that one or more embodiments herein may be configured and/or adapted to be used with or as part of other known and/or later developed arrangements, especially for industrial and/or engineering automation, including at least the embodiments described in the aforementioned '779 patent, '921, and '272 applications.

Embodiments of the present disclosure may comprise a special purpose computer including a variety of computer hardware, as described in greater detail herein.

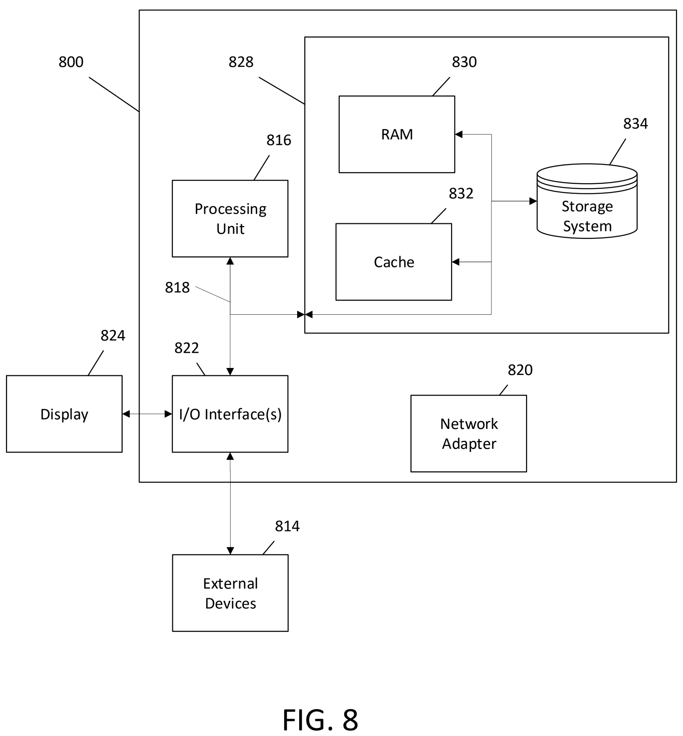

Computer system 800 is shown in FIG. 8 in the form of a general-purpose computing device. The components of computer system 800 may include, but are not limited to, one or more processors or processing units 816, a system memory 828, and a bus 818 that couples various system components including system memory 828 to processor 816.

Bus 818 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system 800 typically includes a variety of computer system readable media. Such media may be any available media that is accessible by computer system 800, and it includes both volatile and non-volatile media, removable and non-removable media.

System memory 828 can include computer system readable media in the form of volatile memory, such as random-access memory (RAM) 830 and/or cache memory 832. Computer system 800 may further include other removable/non-removable, volatile/non-volatile computer system storage media. By way of example only, storage system 834 can be provided for reading from and writing to a non-removable, non-volatile magnetic media (not shown and typically called a "hard drive"). Although not shown, a magnetic disk drive for reading from and writing to a removable, non-volatile magnetic disk, and an optical disk drive for reading from or writing to a removable, non-volatile optical disk such as a CD-ROM, DVD-ROM or other optical media can be provided. In such instances, each can be connected to bus 818 by one or more data media interfaces. As will be further depicted and described below, memory 828 may include at least one program product having a set (e.g., at least one) of program modules that are configured to carry out the functions of embodiments of the disclosure.

Computer system 800 may also communicate with one or more external devices 814 such as a keyboard, a pointing device, a display 824, etc.; one or more devices that enable a user to interact with computer system 800; and/or any devices (e.g., network card, modem, etc.) that enable computer system 800 to communicate with one or more other computing devices. Such communication can occur via Input/Output (I/O) interfaces 822. Still yet, computer system 800 can communicate with one or more networks such as a LAN, a general WAN, and/or a public network (e.g., the Internet) via network adapter 820. As depicted, network adapter 820 communicates with the other components of a network (not shown) via bus 818. It should be understood that although not shown, other hardware and/or software components could be used in conjunction with computer system 800. Examples, include, but are not limited to: microcode, device drivers, redundant processing units, external disk drive arrays, RAID systems, tape drives, and data archival storage systems, and so on.

For purposes of illustration, programs and other executable program components may be shown as discrete blocks. It is recognized, however, that such programs and components reside at various times in different storage components of a computing device and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.
The technical disclosure is further illustrated by the following numbered clauses:
Clause 1. A system for extracting asset hierarchy, the system
   comprising: an industrial automation system;
   an engineering analyzer processor coupled to the industrial automation system;
   an engineering analyzer database coupled to the engineering analyzer processor, the engineering analyzer database storing historical process and instrumentation diagram (P&ID) information and historical legend sheet information;
   a memory coupled to the engineering analyzer processor, the memory storing computer-executable instructions that, when executed by the engineering analyzer processor, configure the engineering analyzer processor for:
      receiving a plurality of legend sheets and a process and instrumentation diagram (P&ID);
      executing an artificial intelligence (AI) asset identification engine to identify each of the one or more assets, wherein executing the AI asset identification engine comprises:
         determining one or more sub assets associated with the identified assets and the related assets based on the P&ID and the historical P&ID information;
      executing a generative artificial intelligence (Gen AI) asset hierarchy extraction engine to identify each of the one or more sub assets, wherein executing the Gen Al asset hierarchy extraction engine comprises:
         generating one or more prompts associated with at least one of the sub assets;
         receiving, in response to the prompts, one or more sub asset identities associated with each of the sub assets;
         determining one or more instruments associated with the sub assets based on the sub asset identities associated with the sub assets and the legend sheets;
      generating an asset hierarchy based on the instruments associated with the sub assets and the sub assets associated with the identified assets and the related assets;
      storing the asset hierarchy in the engineering analyzer database; and
      transmitting, to a display coupled to the engineering analyzer processor, a graphical representation of the asset hierarchy.
Clause 2. The system of clause 1, wherein the memory stores computer-executable instructions that, when executed by the engineering analyzer processor, further configure the engineering analyzer processor for:
   receiving, after transmitting to the display, a human-machine interface (HMI) screen configuration input, the HMI screen configuration input indicating a structure for presenting the asset hierarchy in a HMI screen navigator;
   configuring the HMI screen navigator with the HMI screen configuration input.
Clause 3. The system of clause 1, wherein the memory stores computer-executable instructions that, when executed by the engineering analyzer processor, further configure the engineering analyzer processor for receiving one or more input bounding boxes corresponding to one or more identified assets within the P&ID; and wherein executing the Al asset identification engine further comprises identifying one or more related assets based on the input bounding boxes and the one or more identified assets.
Clause 4. The system of clause 1, wherein the memory stores computer-executable instructions that, when executed by the engineering analyzer processor, further configure the engineering analyzer processor for:
   obtaining a basic Composite Automation Type (CAT) instance for each of the instruments;
   generating a sub asset CAT instance for each of the sub assets and associating the sub asset CAT instance with the basic CAT instance for each of the instruments associated with each of the sub assets; and
   generating an asset CAT instance for each of the assets and associating the asset CAT instance with the sub asset CAT instance for each of the sub assets associated with each of the assets.
Clause 5. The system of clause 4, wherein the basic CAT instance complies with IEC-61499 standards, the sub asset CAT instance complies with IEC-61499 standards, and the asset CAT complies with IEC-61499 standards.
Clause 6. The system of clause 1, wherein the memory stores computer-executable instructions that, when executed by the engineering analyzer processor, further configure the engineering analyzer processor for:
   receiving, in response to displaying the graphical representation of the asset hierarchy transmitted, one or more inputs configured to implement an operation of the industrial automation system; and
   generating, responsive to the one or more inputs, a set of control instructions configured to cause the industrial automation system to perform the operation.
Clause 7. The system of clause 1, wherein the memory stores computer-executable instructions that, when executed by the engineering analyzer processor, further configure the engineering analyzer processor for:
   performing a process configured to extract information from the graphical representation to control one or more operations in the industrial automation system.
Clause 8. The system of clause 1, wherein the memory stores computer-executable instructions that, when executed by the engineering analyzer processor, further configure the engineering analyzer processor for:
   executing a generative artificial intelligence (Gen AI) instrument identification engine to identify each of the one or more instruments, wherein executing the Gen Al instrument identification engine comprises:
   receiving the prompts associated with at least one of the sub assets;
   identifying the one or more instruments associated with each of the assets based on the prompts associated with at least one of the sub assets, the legend sheets, and a process and instrumentation diagram; and
   transmitting, to the Gen Al asset hierarchy extraction engine, the instruments associated with each of the sub assets.
Clause 9. The system of clause 1, wherein executing the Gen AI asset hierarchy extraction engine further comprises:
   receiving, before generating the prompts, a training set of sub asset information based on one or more historical process and instrumentation diagrams and one or more historical legend sheets, the historical process and instrumentation diagrams comprising one or more assets, one or more sub assets associated with each of the assets, and process control information, and the historical legend sheets comprising instrument identification information;
   receiving prompts based asset on hierarchy context information; and
   performing retrieval-augmented generation based on the training set of sub asset information and the prompts.
Clause 10. A method for extracting asset hierarchy in an industrial automation system, the method comprising:
   receiving a plurality of legend sheets and a process and instrumentation diagram (P&ID);
   determining one or more assets based on the P&ID;
   executing, by an engineering analyzer processor, an artificial intelligence (AI) asset identification engine to identify each of the assets, wherein executing the Al asset identification engine comprises:
      determining, using a machine learning model, one or more sub assets associated with each of the assets based on the P&ID;
   executing, by the engineering analyzer processor, a generative artificial intelligence (Gen AI) asset hierarchy extraction engine to identify each of the sub assets, wherein executing the Gen Al asset hierarchy extraction engine comprises:
      generating a prompt for each of the sub assets;
      receiving, in response to the prompt, a sub asset identity associated with each of the sub assets;
      determining one or more instruments associated with each of the sub assets based on the sub asset identity associated with each of the sub assets and the legend sheets;
   generating an asset hierarchy based on the assets, the sub assets associated with each of the assets, and the instruments associated with each of the sub assets;
   obtaining a basic Composite Automation Type (CAT) instance for each of the instruments;
   generating a sub asset CAT instance for each of the sub assets and associating the sub asset CAT instance with the basic CAT instance for each of the instruments associated with each of the sub assets;
   generating an asset CAT instance for each of the assets and associating the asset CAT instance with the sub asset CAT instance for each of the sub assets associated with each of the assets.
Clause 11. The method of clause 10, wherein determining one or more assets based on the P&ID comprises generating a bounding box defining the one more assets within the P&ID.
Clause 12. The method of clause 10, further comprising generating a human machine interface screen navigation based on the asset hierarchy.
Clause 13. The method of clause 10, further comprising:
   training, before executing, the machine learning model of the Al asset identification engine where in training the machine learning model comprises:
      generating a training set of asset information based on one or more historical process and instrumentation diagrams, the historical process and instrumentation diagrams comprising one or more assets, one or more sub assets associated with each of the assets, and process control information;
      generating a test set of asset information based the historical process and instrumentation diagrams;
      providing to the training set of asset information to the Al asset identification engine;
      updating the machine learning model based on the training set of asset information;
      providing, to the Al asset identification engine, the test set of asset information to the machine learning model;
      receiving a predicted asset based on the input test set of asset information; and
      updating, in response to feedback information, the machine learning model.
Clause 14. The method of clause 10, the method further comprising:
   transmitting, to a display coupled to the engineering analyzer processor, a graphical representation of the asset hierarchy;
   receiving, in response to displaying the graphical representation of the asset hierarchy transmitted, one or more inputs configured to implement an operation of the industrial automation system; and
   generating, responsive to the one or more inputs, a set of control instructions configured to cause the industrial automation system to perform the operation.
Clause 15. The method of clause 14, the method further comprising:
   performing a process configured to extract information from the graphical representation to control one or more operations in the industrial automation system.
Clause 16. The method of clause 10, wherein the basic CAT instance complies with IEC-61499 standards, the sub asset CAT instance complies with IEC-61499 standards, and the asset CAT complies with IEC-61499 standards.
Clause 17. A method of training a machine learning model and a generative artificial intelligence model to generate an asset hierarchy of an industrial automation system, the method comprising:
   generating a training set of asset information based on one or more historical process and instrumentation diagrams, the historical process and instrumentation diagrams comprising one or more assets, one or more sub assets associated with each of the assets, and process control information;
   generating a test set of asset information based the historical process and instrumentation diagrams;
   providing to the training set of asset information to the machine learning model;
   updating the machine learning model based on the training set of asset information;
   providing, to the machine learning model, the test set of asset information to the machine learning model;
   receiving a predicted asset based on the input test set of asset information; and
   updating, in response to feedback information, the machine learning model;
   generating a training set of sub asset information based on the historical process and instrumentation diagrams and one or more historical legend sheets, the historical process and instrumentation diagrams comprising one or more assets, one or more sub assets associated with each of the assets, and process control information, and the historical legend sheets comprising instrument identification information;
   generating a test set of sub asset information based on the historical process and instrumentation diagrams and historical legend sheets;
   developing one or more prompts based asset on hierarchy context information;
   performing retrieval-augmented generation by providing the training set of sub asset information and the prompts to the generative artificial intelligence model; and
   fine-tuning the generative artificial intelligence based on applying the test set of sub asset information to the generative artificial intelligence model.
Clause 18. The method of clause 17, the method further comprising:
   generating an asset hierarchy using the machine learning model and the generative artificial intelligence model based on an input process and instrumentation diagram and one or more input legend sheets;
   receiving a modified asset hierarchy;
   updating the machine learning model based on the modified asset hierarchy and the input process and instrumentation diagram; and
   fine-tuning the generative artificial intelligence model based on the modified asset hierarchy, the input process and instrumentation diagram, and the input legend sheets.
Clause 19. The method of clause 17, wherein the historical process and instrumentation diagrams further comprise a bounding box associated with each of the assets.
Clause 20. The method of clause 17, the method further comprising training a generative artificial intelligence (Gen AI) instrument identification model to identify each of the one or more instruments, wherein training the Gen AI instrument identification model comprises:
   generating a test set of instrument information based on the historical process and instrumentation diagrams and historical legend sheets;
   developing one or more instrument identification prompts based on asset hierarchy context information and legend sheet information;
   performing retrieval-augmented generation by providing the training set of instrument information and the instrument identification prompts the Gen AI instrument identification model; and
   fine-tuning the Gen Al instrument identification model based on applying the test set of instrument information to the Gen AI instrument identification model.
Clause 21. The method of clause 17, wherein hierarchy context information comprises IEC-61499 standards information.

## Claims

1. A system for extracting asset hierarchy, the system comprising:
an industrial automation system;
an engineering analyzer processor coupled to the industrial automation system;
an engineering analyzer database coupled to the engineering analyzer processor, the engineering analyzer database storing historical process and instrumentation diagram (P&ID) information and historical legend sheet information;
a memory coupled to the engineering analyzer processor, the memory storing computer-executable instructions that, when executed by the engineering analyzer processor, configure the engineering analyzer processor for:
receiving a plurality of legend sheets and a process and instrumentation diagram (P&ID);
executing an artificial intelligence (AI) asset identification engine to identify each of the one or more assets, wherein executing the AI asset identification engine comprises:
determining one or more sub assets associated with the identified assets and the related assets based on the P&ID and the historical P&ID information;
executing a generative artificial intelligence (Gen AI) asset hierarchy extraction engine to identify each of the one or more sub assets, wherein executing the Gen Al asset hierarchy extraction engine comprises:
generating one or more prompts associated with at least one of the sub assets;
receiving, in response to the prompts, one or more sub asset identities associated with each of the sub assets;
determining one or more instruments associated with the sub assets based on the sub asset identities associated with the sub assets and the legend sheets;
generating an asset hierarchy based on the instruments associated with the sub assets and the sub assets associated with the identified assets and the related assets;
storing the asset hierarchy in the engineering analyzer database; and
transmitting, to a display coupled to the engineering analyzer processor, a graphical representation of the asset hierarchy.

2. The system of claim 1, wherein the memory stores computer-executable instructions that, when executed by the engineering analyzer processor, further configure the engineering analyzer processor for:
receiving, after transmitting to the display, a human-machine interface (HMI) screen configuration input, the HMI screen configuration input indicating a structure for presenting the asset hierarchy in a HMI screen navigator;
configuring the HMI screen navigator with the HMI screen configuration input.

3. The system of any of the above claims, wherein the memory stores computer-executable instructions that, when executed by the engineering analyzer processor, further configure the engineering analyzer processor for receiving one or more input bounding boxes corresponding to one or more identified assets within the P&ID; and wherein executing the Al asset identification engine further comprises identifying one or more related assets based on the input bounding boxes and the one or more identified assets.

4. The system of any of the above claims, wherein the memory stores computer-executable instructions that, when executed by the engineering analyzer processor, further configure the engineering analyzer processor for:
obtaining a basic Composite Automation Type (CAT) instance for each of the instruments;
generating a sub asset CAT instance for each of the sub assets and associating the sub asset CAT instance with the basic CAT instance for each of the instruments associated with each of the sub assets; and
generating an asset CAT instance for each of the assets and associating the asset CAT instance with the sub asset CAT instance for each of the sub assets associated with each of the assets.

5. The system of claim 4, wherein the basic CAT instance complies with IEC-61499 standards, the sub asset CAT instance complies with IEC-61499 standards, and the asset CAT complies with IEC-61499 standards.

6. The system of any of the above claims, wherein the memory stores computer-executable instructions that, when executed by the engineering analyzer processor, further configure the engineering analyzer processor for:
receiving, in response to displaying the graphical representation of the asset hierarchy transmitted, one or more inputs configured to implement an operation of the industrial automation system; and
generating, responsive to the one or more inputs, a set of control instructions configured to cause the industrial automation system to perform the operation.

7. The system of any of the above claims, wherein the memory stores computer-executable instructions that, when executed by the engineering analyzer processor, further configure the engineering analyzer processor for:
performing a process configured to extract information from the graphical representation to control one or more operations in the industrial automation system.

8. The system of any of the above claims, wherein the memory stores computer-executable instructions that, when executed by the engineering analyzer processor, further configure the engineering analyzer processor for:
executing a generative artificial intelligence (Gen AI) instrument identification engine to identify each of the one or more instruments, wherein executing the Gen Al instrument identification engine comprises:
receiving the prompts associated with at least one of the sub assets;
identifying the one or more instruments associated with each of the assets based on the prompts associated with at least one of the sub assets, the legend sheets, and a process and instrumentation diagram; and
transmitting, to the Gen Al asset hierarchy extraction engine, the instruments associated with each of the sub assets.

9. The system of any of the above claims, wherein executing the Gen Al asset hierarchy extraction engine further comprises:
receiving, before generating the prompts, a training set of sub asset information based on one or more historical process and instrumentation diagrams and one or more historical legend sheets, the historical process and instrumentation diagrams comprising one or more assets, one or more sub assets associated with each of the assets, and process control information, and the historical legend sheets comprising instrument identification information;
receiving prompts based asset on hierarchy context information; and
performing retrieval-augmented generation based on the training set of sub asset information and the prompts.

10. A method for extracting asset hierarchy in an industrial automation system, the method comprising:
receiving a plurality of legend sheets and a process and instrumentation diagram (P&ID);
determining one or more assets based on the P&ID;
executing, by an engineering analyzer processor, an artificial intelligence (AI) asset identification engine to identify each of the assets, wherein executing the Al asset identification engine comprises:
determining, using a machine learning model, one or more sub assets associated with each of the assets based on the P&ID;
executing, by the engineering analyzer processor, a generative artificial intelligence (Gen AI) asset hierarchy extraction engine to identify each of the sub assets, wherein executing the Gen Al asset hierarchy extraction engine comprises:
generating a prompt for each of the sub assets;
receiving, in response to the prompt, a sub asset identity associated with each of the sub assets;
determining one or more instruments associated with each of the sub assets based on the sub asset identity associated with each of the sub assets and the legend sheets;
generating an asset hierarchy based on the assets, the sub assets associated with each of the assets, and the instruments associated with each of the sub assets;
obtaining a basic Composite Automation Type (CAT) instance for each of the instruments;
generating a sub asset CAT instance for each of the sub assets and associating the sub asset CAT instance with the basic CAT instance for each of the instruments associated with each of the sub assets;
generating an asset CAT instance for each of the assets and associating the asset CAT instance with the sub asset CAT instance for each of the sub assets associated with each of the assets.

11. The method of claim 10, wherein determining one or more assets based on the P&ID comprises generating a bounding box defining the one more assets within the P&ID.

12. The method of any of claims 10 or 11, further comprising:
training, before executing, the machine learning model of the Al asset identification engine where in training the machine learning model comprises:
generating a training set of asset information based on one or more historical process and instrumentation diagrams, the historical process and instrumentation diagrams comprising one or more assets, one or more sub assets associated with each of the assets, and process control information;
generating a test set of asset information based the historical process and instrumentation diagrams;
providing to the training set of asset information to the Al asset identification engine;
updating the machine learning model based on the training set of asset information;
providing, to the Al asset identification engine, the test set of asset information to the machine learning model;
receiving a predicted asset based on the input test set of asset information; and
updating, in response to feedback information, the machine learning model.

13. The method of any of claims 10 to 12, the method further comprising:
transmitting, to a display coupled to the engineering analyzer processor, a graphical representation of the asset hierarchy;
receiving, in response to displaying the graphical representation of the asset hierarchy transmitted, one or more inputs configured to implement an operation of the industrial automation system; and
generating, responsive to the one or more inputs, a set of control instructions configured to cause the industrial automation system to perform the operation.

14. The method of claim 13, the method further comprising:
performing a process configured to extract information from the graphical representation to control one or more operations in the industrial automation system.

15. The method of claim 10 to 14, wherein the basic CAT instance complies with IEC-61499 standards, the sub asset CAT instance complies with IEC-61499 standards, and the asset CAT complies with IEC-61499 standards.
